# EUROPÄISCHE PATENTANMELDUNG

(11) **EP 3 470 668 A1**
(43) Veröffentlichungstag der Anmeldung: **17.04.2019**
(21) Anmeldenummer: 18200684.1
(22) Anmeldetag: 16.10.2018
(51) Int. Cl.: F03D 3/06, F03D 9/32

(54) **WINDKRAFTANLAGE ZUR UMWANDLUNG VON WINDENERGIE IN MECHANISCHE UND ELEKTRISCHE ENERGIE SOWIE LAND- ODER WASSERFAHRZEUG MIT EINER SOLCHEN WINDKRAFTANLAGE ALS ANTRIEB**

(30) Priorität: 16.10.2017 DE 202017106237 U
(71) Anmelder: Kunz, Georg, 88339 Bad Waldsee (DE)
(72) Erfinder: Kunz, Georg, 88339 Bad Waldsee (DE); Schwendler, Franz, 8463 Leutschach (DE)
(74) Vertreter: Winter, Brandl, Fürniss, Hübner, Röss, Kaiser, Polte - Partnerschaft mbB

(57) **Zusammenfassung**

Es wird eine Windkraftanlage mit einem um eine vertikale Rotorachse (4) drehbaren Rotor (2) angegeben, der im radialen Abstand zur Rotorachse (4) wenigstens zwei Rotorelemente (6) mit jeweils wenigstens zwei Luftleitelementen (16-1, 16-2) umfasst, sowie ein Land- bzw. Wasserfahrzeug, dass mit einer solchen Windkraftanlage als Antrieb ausgerüstet ist. Dadurch, dass die konkaven Seiten (20) der wenigstens zwei Luftleitelemente (16-1, 16-2) von der Rotorachse (4) wegweisen und durch unterschiedliche Bogenlängen zweier unmittelbar benachbarter Luftleitelemente ergibt sich ein verbesserter Wirkungsgrad durch einen verringerten Strömungswiderstand, vergrößerten Auftriebseffekt bzw. eine größere Angriffsfläche für den Wind. Dieser zusätzliche Auftrieb führt zu einem gewünschten Drehmoment des Rotors. Durch die beanspruchten Bogenlängenverhältnisse verringert sich der Umlaufwiderstand der Rotorelemente.

## Beschreibung

Die Erfindung betrifft eine Windkraftanlage zur Umwandlung von Windenergie in mechanische Energie nach Anspruch 1 sowie eine Windkraftanlage zur Umwandlung von Windenergie in elektrische Energie nach Anspruch 14 und ein Land- oder Wasserfahrzeug mit einer solchen Windkraftanlage als Antrieb nach Anspruch 15.

Windkraftanlagen mit einem Rotor, der an einer vertikalen Rotorachse montiert ist, sind aus einer Vielzahl von Druckschriften bekannt. Beispielhaft zeigen die EP 2 348 216 B1, US 8,297,911 B2, DE 10 2013 010 947 B3, US 7,802,967 B2 und die US 5,133,637 B Windkraftanlagen mit vertikaler Rotorachse. All diesen Windkraftanlagen mit vertikaler Rotorachse ist gemeinsam, dass der Rotor eine Mehrzahlt von Rotorelementen aufweist, die wiederum eine Mehrzahl von Windleitelementen aufweisen. Durch den senkrecht zur Rotorachse anströmenden Wind, werden die Rotorelemente in Bewegung versetzt und der Rotor beginnt sich zu drehen. Da die Rotorelemente auf ihrer Kreisbahn um die Rotorachse zu dem anströmenden Wind in unterschiedlichen Winkeln ausgerichtet sind, tragen sie je nach der Position auf der Kreisbahn unterschiedlich zur Drehung der Rotorachse bei. In bestimmten Abschnitten der Kreisbahn kommt es zu einer mehr oder minder großen Bremswirkung. Da die Kreisbahn auf der sich die Rotorelemente bewegen nicht verändert werden kann, ist es nötig, die einzelnen Rotorelemente bzw. Luftleitelemente so zu gestalten, dass sie möglichst effektiv zur Drehung der Rotorachse beitragen und auf einem möglichst geringen Abschnitt ihrer Kreisbahn bremsend wirken.

Aus der DE 101 05 570 B4 ist eine Windkraftmaschine mit einer vertikalen Rotorachse bekannt, bei der drei Rotorelemente mit gleichen Zwischenwinkeln in festem Abstand zur Rotorachse angeordnet sind. Jedes Rotorelement umfasst drei Luftleitelemente, die quer zu ihrer Längserstreckung jeweils einen bogenförmigen Querschnitt aufweisen, sodass die Luftleitelemente jeweils eine konkave Seite und eine konvexe Seite aufweisen. Die konkaven Seiten weisen in Richtung Rotorachse und die konvexen Seiten sind von der Rotorachse abgewandt. Bei unmittelbar benachbarten Luftleitelementen liegen sich also eine konvexe und eine konkave Seite gegenüber. Zwischen zwei unmittelbar benachbarten Luftleitelementen ist ein Strömungskanal ausgebildet, dessen Querschnitt sich in radialer Richtung nach innen in Richtung der Rotorachse verringert, wodurch ein Düsen-Effekt entsteht. Die gleich breiten Luftleitelemente sind so angeordnet, dass sie sich nur teilweise überlappen, wodurch die am Ende des Strömungskanals zwischen zwei Luftleitelementen ausströmende Luft entlang dem nicht überlappenden Abschnitt eines gekrümmten Luftleitelements streicht und dort einen Auftriebseffekt erzeugt. Wenn die Luft in die Strömungskanale mit sich verengendem Querschnitt einströmt wirken die einzelnen Rotorelemente als Auftriebsläufer. An anderer Position auf ihrer Umlaufbahn werden die Luftleitelemente direkt angeblasen und wirken als Widerstandsläufer. In der Praxis hat sich jedoch herausgestellt, dass diese Ausgestaltung nicht optimal ist.

Aus der WO 2017/156135 A ist eine Windkraftanlage bekannt, bei der die konkaven Seiten der Luftleitelemente von der Rotorachse wegweisen und unmittelbar benachbarte Luftleitelemente eine unterschiedliche Bogenlänge aufweisen, so dass sich ein Strömungskanal und ein Nicht-Überlappbereich zwischen unmittelbar benachbarten Luftleitelementen ergibt. Allerdings ist die Bogenläge des kleineren Luftleitelements so klein, dass der hintere Bereich des Nicht-Überlappbereichs kaum zu einer zusätzlichen Auftriebskraft, Segeleffekt und einem damit verbundenen zusätzlichen Drehmoment führt.

Es ist daher Aufgabe der vorliegenden Erfindung eine Windkraftmaschine anzugeben, die einen höheren Wirkungsgrad als die bekannten Windkraftanlagen mit vertikaler Rotorachse aufweisen. Weiter ist es Aufgabe der Erfindung ein Land- bzw. Wasserfahrzeug anzugeben, dass mit einer solchen Windkraftanlage als Antrieb ausgerüstet ist.

Die Lösung dieser Aufgabe erfolgt durch die Merkmale des Anspruchs 1.

Dadurch, dass die konkave Seite der wenigstens zwei Luftleitelemente von der Rotorachse wegweisen und dadurch, dass die Bogenlängen zweier unmittelbar benachbarter Luftleitelemente unterschiedlich groß sind, ergibt sich ein verbesserter Wirkungsgrad. Wie bei dem nächstkommenden Stand der Technik wird durch den Düseneffekt bei bestimmten Positionen des Rotorelements auf seiner Umlaufbahn ein Auftrieb erzeugt, wenn die beschleunigte Luft aus dem Strömungskanal über die konvexe Seite des nicht überlappenden Bereichs des Luftleitelements mit der größeren Bogenlänge streicht. Durch die größere Bogenlänge ergibt sich zum einen in bestimmten Bereichen der Umlaufbahn ein vergrößerter Auftriebseffekt gegenüber dem Stand der Technik und in anderen Bereichen der Umlaufbahn in denen die Rotorelemente als Widerstandläufer wirken bieten die breiteren Luftleitelemente eine größere Angriffsfläche für den Wind. Durch die nach außen weisende konkave Seite ergibt sich ein verringerter Strömungswiderstand der Luftleitelemente. Eine stärkere Krümmung der Luftleitelemente ergibt mehr Drehmoment und eine geringere Umlaufgeschwindigkeit. Flachere Luftleitelemente ergeben weniger Drehmoment und eine höhere Umlaufgeschwindigkeit. Auf diese Weise kann die Windkraftanlage dem gewünschten Einsatzzweck angepasst werden. Aufgrund der unterschiedlichen Bogenlänge der und des Abstands zwischen unmittelbar benachbarten Luftleitelemente ergibt sich ein vergleichsweise großer Nicht-Überlappungsbereich. In diesem Nicht-Überlappungsbereich strömt die Luft aus dem düsenförmigen Strömungskanal über den gekrümmten Nicht-Überlappungsbereich, wodurch ein zusätzlicher Auftrieb, Segeleffekt erzeugt wird. Dieser zusätzliche Auftrieb führt zu einem gewünschten Drehmoment des Rotors. Durch das angegebene Bogenlängenverhältnis ergibt sich ein maximaler zusätzlicher Auftrieb. Eine zu geringe Bogenlänge des kürzeren Luftleitelements führt dazu, dass der hintere Bereich des Nicht-Überlappbereichs hinsichtlich des zusätzlichen Auftriebs nahezu wirkungslos wird. Eine zu große Bogenlänge des kürzeren Luftleitelements führt dazu, dass der Nicht-Überlappbereich zu klein wird und daher ebenfalls weniger zusätzlichen Auftrieb erzeugt. Durch die beanspruchten Bogenlängenverhältnisse verringert sich der Umlaufwiderstand der Rotorelemente.

Durch die vorteilhafte Weiterbildung nach Anspruch 2 ergeben sich besonders gute Ergebnisse hinsichtlich zusätzlichem Auftrieb.

Durch die vorteilhafte Weiterbildung nach Anspruch 3 wird erreicht, dass bei mehr als zwei Luftleitelementen immer der gewünschte Düsen-Effekt und die verlängerte konvexe Außenseite vorliegen.

Durch die vorteilhafte Ausgestaltung nach Anspruch 4 ergibt sich eine kompakte Form der erfindungsgemäßen Windkraftanlage und die Luftleitelemente können laminar angeströmt werden.

Durch die vorteilhafte Ausgestaltung der Erfindung nach Anspruch 5 ergeben sich zum einen definierte Verhältnisse, zum anderen wird die Herstellung der Rotorelemente vereinfacht.

Durch die vorteilhafte Ausgestaltung der Erfindung nach Anspruch 6 wird erreicht, dass immer ein definierter Strömungskanal zwischen zwei Luftleitelementen vorliegt.

Durch die vorteilhafte Ausgestaltung nach Anspruch 7 und 8 wird den verschiedenen Funktionen der Luftleitelemente entlang ihrer Strömungsrichtung Rechnung getragen. Durch die unterschiedliche Krümmung der Luftleitelemente im Überlappungsbereich und Nicht-Überlappungsbereich kann zum einen die Antriebswirkung der Rotorelemente in dem Bereich der Umlaufbahn optimiert werden, in dem sie als Auftriebs- oder Widerstandsläufer wirken. Zum anderen wird hierdurch auch der Widerstand der Rotorelemente in dem Bereich der Umlaufbahn verringert, in dem sie nicht als Auftriebs- oder Widerstandsläufer wirken.

Durch die vorteilhafte Weiterbildung nach Anspruch 9 wird ein umfangseitig geschlossener Strömungskanal zwischen zwei unmittelbar benachbarten Luftleitelementen bereitgestellt. Verwirbelungen am oberen und unteren Ende der Luftleitelemente werden damit verhindert.

Durch die vorteilhafte Ausgestaltung der Erfindung nach Anspruch 10 kann die Stellung der Rotorelemente so verändert werden, dass keine nennenswerte Drehmomentübertragung auf die Rotorachse stattfindet und sich die Windkraftanlage im Leerlauf befindet.

Durch die vorteilhafte Ausgestaltung der Erfindung nach Anspruch 11 lassen sich in mehreren übereinander liegenden Ebenen jeweils Rotorelemente anordnen und so die Effektivität der Anlage steigern.

Durch die vorteilhafte Ausgestaltung der Erfindung nach Anspruch 12 ergibt sich auf einfache Weise ein stabiles Luftleitelement das sich nicht ohne weiteres verwinden lässt.

Durch die vorteilhafte Ausgestaltung der Erfindung nach Anspruch 13 ergibt sich ein zusätzliches Drehmoment.

Die übrigen Unteransprüche beziehen sich auf weitere vorteilhafte Ausgestaltungen.

Weitere Einzelheiten, Merkmale und Vorteile der Erfindung ergeben sich aus der nachfolgenden Beschreibung anhand der Zeichnung.

Es zeigt:
Fig. 1 eine schematische Darstellung einer ersten Ausführungsform der Erfindung in Aufsicht von oben in Richtung Rotationsachse
Fig. 2 eine schematische Schnittdarstellung eines der drei Rotorelemente der ersten Ausführungsform,
Fig. 3 eine Seitenansicht des Rotorelements nach Fig. 2,
Fig. 4 die Strömungsverhältnisse eines einzelnen Rotorelements an verschiedenen Position seiner Umlaufbahn,
Fig. 5 eine zweite Ausführungsform der Erfindung in entsprechender Darstellung nach Fig. 1,
Figuren 6, 7 und 8 schematische Darstellung weiterer Ausführungsformen mit Rotorelementen, die drei Luftleitelemente aufweisen.

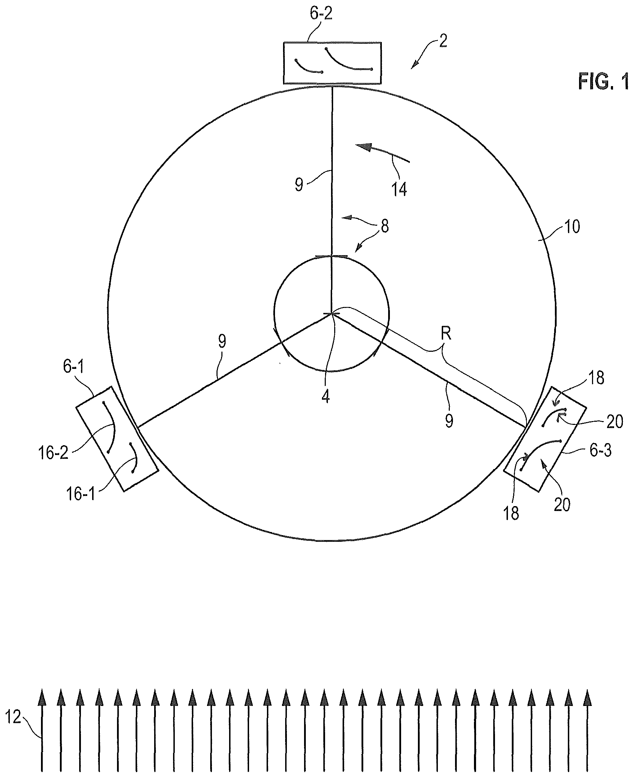

Fig.1 zeigt schematisch in Aufsicht einer ersten Ausführungsform der Windkraftanlage mit einem Rotor 2, der mit einer vertikalen Rotorachse 4 montiert ist. Der Rotor 2 umfasst drei Rotorelemente 6-1, 6-2 und 6-3. Die drei Rotorelemente 6-i sind mittels einer Halteeinrichtung 8 in einem bestimmten radialen Abstand R von der Rotorachse 4 angeordnet. Der Teil der Halteeinrichtung 8, die die Rotorelemente 6 mit der Rotorachse 4 verbindet ist als Strömungsprofil 9 ausgestaltet, um den Luftwiderstand der Halteinrichtung 8 zu minimieren. Die Strömungsprofile zwischen den Rotorelementen 6-i und der Rotorachse 4 schließen jeweils einen Winkel von 120 Grad ein, sodass die Rotorelemente 6-i gleichmäßig über die Umlaufbahn 10 der Rotorelemente 6-i um die Rotorachse 4 verteilt sind. Die Pfeile 12 zeigen die Anströmrichtung des Windes und der Pfeil 14 zeigt die Drehrichtung des Rotors 2 bei der Windanströmrichtung 12.

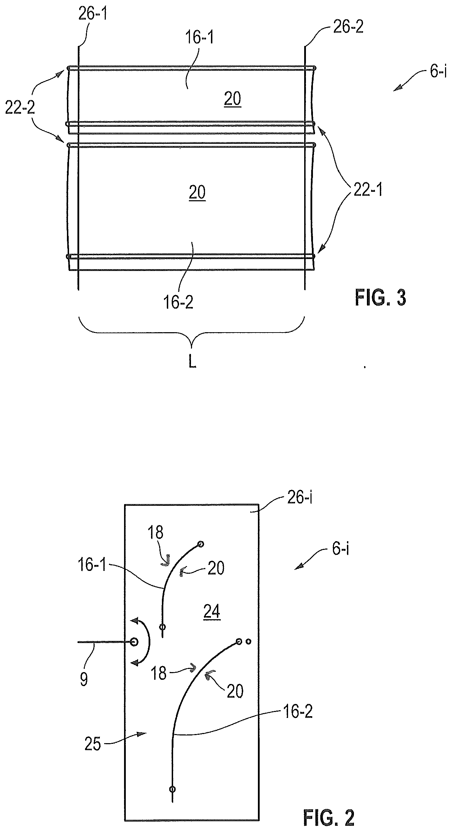

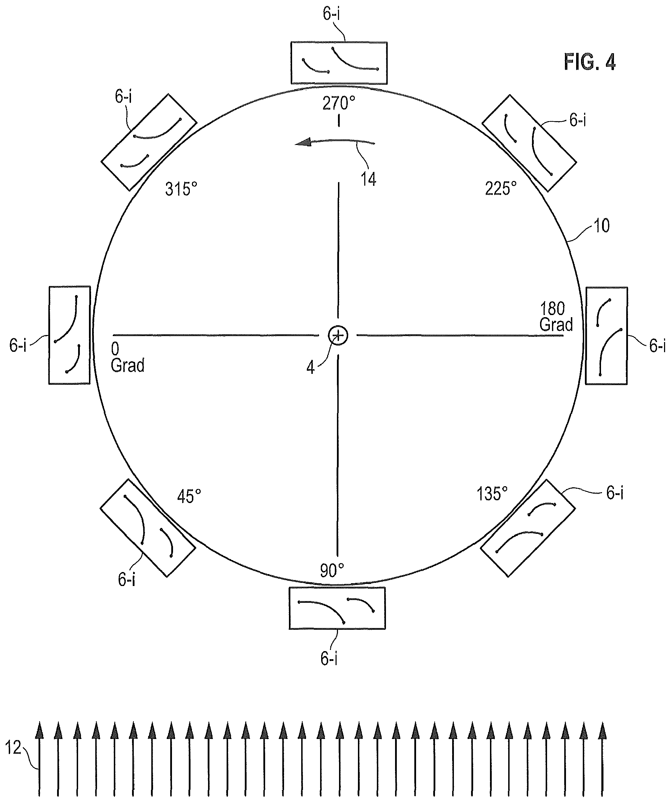

Jedes Rotorelement 6-i umfasst ein erstes und ein zweites Luftleitelement 16-1 und 16-2. Wie aus Figuren 1, 2 und 3 zu ersehen sind, sind die Luftleitelemente 16-i gekrümmt und weisen eine konvexe Seite 18 und eine konkave Seite 20 sowie parallel zueinander und zur Rotorachse verlaufende Längskanten 22-1 und 22-2 auf. Die Bogenlänge BL der Luftleitelemente 16-i, d. h. die Länge des gekrümmten Luftleitelements in einer Schnittebene senkrecht zur Rotorachse 4, ist beim zweiten Luftleitelement 16-2 größer als beim ersten Luftleitelement 16-1. Damit überlappen die beiden Luftleitelemente 16-i nur teilweise im Bereich des Strömungskanals 24 und es verbleibt ein Nicht-Überlappungsbereich 25. In der Darstellung nach Fig. 3 kann man aufgrund der unterschiedlichen Bogenlänge BL der und des Abstands zwischen den beiden Luftleitelemente 16-1 und 16-2 sogar zwischen den beiden Luftleitelementen 16-1 und 16-2 hindurchsehen. Die Darstellung in Fig. 3 entspricht der Position 90° des Luftleitelements 6-i in Fig. 4. Zwischen den beiden Luftleitelementen 16-1 und 16-2, d. h. zwischen der konkaven Seite 20 des ersten Luftleitelements 16-1 und der konvexen Seite 18 des zweiten Luftleitelements 16-2 wird ein Strömungskanal 24 gebildet, dessen Querschnitt sich in radialer Richtung nach Innen verringert. Durch diesen sich verringernden Querschnitt wird der gewünschte Düseneffekt erzeugt. In den Strömungskanal 24 einströmende Luft wird daher beschleunigt und diese beschleunigte Luft streicht an dem nicht überlappenden Teil 25 des zweiten Luftleitelements 16-2 vorbei und erzeugt einen Auftrieb. Die gekrümmten Luftleitelemente 16-i sind in Längsrichtung geradlinig ausgebildet und verlaufen parallel zur Rotorachse 4, wie dies aus Figur 3 zu ersehen ist. Mittels der Halteeinrichtung 8, die ein oberes und ein unteres plattenförmiges Element 26-1 und 26-2 am oberen und unteren Ende der beiden Luftleitelemente 16-i umfasst, werden die beiden Luftleitelemente 16-i in starrer Relation zueinander gehalten. Das obere und das untere plattenförmige Element 26-1, 26-2 sind Teil der der Begrenzung des Strömungskanals 24. An den Längskanten 22-i sind die Luftleitelemente gefalzt oder gerollt, wodurch sich ihre Stabilität erhöht.

Fig. 4 zeigt eine Fig. 1 entsprechende Darstellung, wobei ein einzelnes Rotorelement 6-i in verschiedenen Positionen auf der Umlaufbahn 10 gezeigt ist. Im Bereich zwischen 20° bis ca. 90° zur Windrichtung wirken die Rotorelemente 6-i als Auftriebsläufer. Im Bereich zwischen 40° und ca. 90° zur Windrichtung ergibt sich ein Düseneffekt oder Staustrahl. Im Bereich zwischen 90° und ca. 160° zur Windrichtung wirken die Rotorelemente 6-i als Widerstandsläufer. Im Bereich zwischen 200° und ca. 230° wird wieder eine Auftriebskraft erzeugt und im Bereich zwischen 310° und 330° zur Windrichtung wird durch die Auftriebskraft eine Querkraft erzeugt. Im Bereich zwischen 160° und 310° und zwischen 330 und 360° leisten die Rotorelemente 6 keinen aktiven Beitrag, jedoch ist durch die erfindungsgemäße Form der Luftleitelemente 16 und der Rotorelemente 6 auch die Bremswirkung in diesem Bereich im Vergleich zum Stand der Technik stark reduziert.

Der Rotor 2 gemäß der vorliegenden Erfindung nutzt durch die Formgebung der Rotorelemente 6-i bzw. der Luftleitelemente 16-i sowohl den tatsächlichen Wind aus der Richtung 12 als auch den scheinbaren Wind, der durch die Bewegung der Rotorelemente 6-i auf der Umlaufbahn 10 erzeugt wird. Ähnlich wie bei einem Segelboot mit Vorsegel und Hauptsegel, ergibt sich bei der Durchströmung von zwei oder mehreren gekrümmten und beabstandeten Luftleitelementen 16-i ein Düseneffekt, d. h. eine beschleunigte Strömung durch Verminderung des Querschnitts. Durch die unterschiedliche Breite der Luftleitelemente 16-i und durch die nach innen gerichtete konvexe Seite der Luftleitelemente 16-i ergeben sich im Vergleich zum Stand der Technik ein erhöhtes Drehmoment und eine erhöhte Drehzahl der Windkraftanlage. Durch den Düsen-Effekt wird die Windkraftanlage selbst regelnd, da bei einer bestimmten Windgeschwindigkeit der Strömungskanal quasi "verstopft" und der Rotor 2 nicht mehr schneller drehen kann.

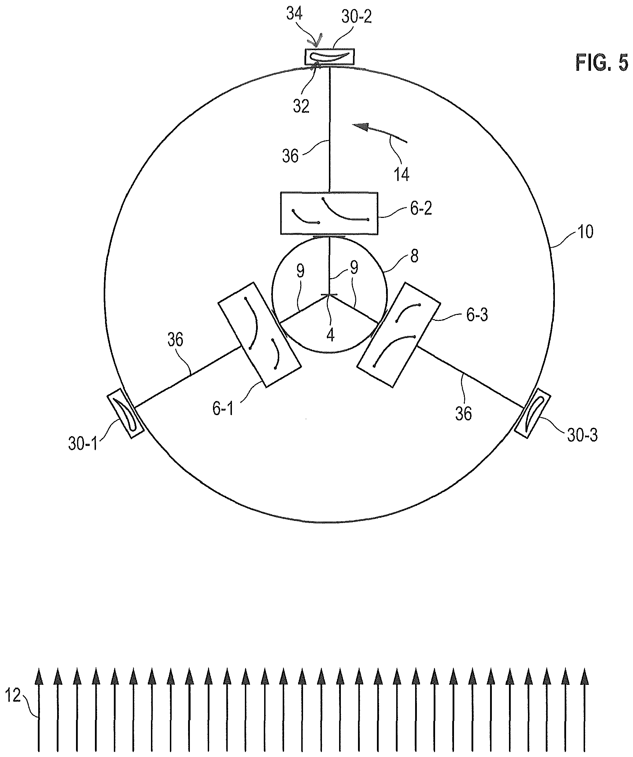

Fig. 5 zeigt eine zweite Ausführungsform der Erfindung, die sich von der ersten Ausführungsform lediglich dadurch unterscheidet, dass jedem Rotorelement 6-i ein geradlinig vertikal verlaufender Tragflügel 30-1, 30-2 und 30-3 zugeordnet ist. Die Tragflügel 30-i umfassen jeweils eine konvexe und eine konkave Seite 32, 34, wobei die konkave Seite 34 nach außen von der Rotorachse 4 weg weist. Durch Haltestangen 36, die ein Strömungsprofil aufweisen und Teil der Halteeinrichtung 8 sind, werden die Tragflächen 30-i im Abstand R von den Rotorelementen 6-i gehalten.

Durch die Tragflügel 30-1 wird zusätzliches Drehmoment auf die Rotorachse 4 eingekoppelt. Ähnliche Konstruktionen sind von den S. Savonius- und G. Darrieus-Rotoren bekannt.

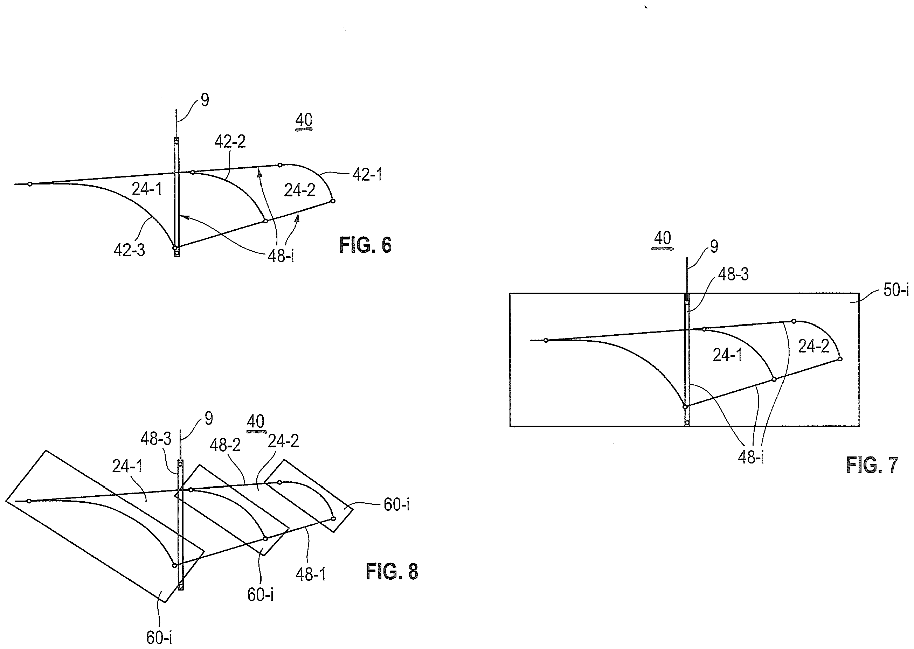

Die Figuren 6, 7 und 8 zeigen eine vierte, fünfte und sechste Ausführungsform der Erfindung, mit Rotorelementen 40, die jeweils drei Luftleitelemente 42-1, 42-2 und 42-3 aufweisen. Bei allen drei Ausführungsformen vergrößert sich die Bogenlänge BL der Luftleitelemente 42-i vom ersten 42-1 zum dritten Luftleitelement 42-3 hin. Durch die Anordnung von drei Luftleitelementen 42-i werden zwei Strömungskanäle 24-1 und 24-2 gebildet.

Die Ausführungsformen nach den Figuren 6, 7 und 8 unterscheiden sich lediglich in der Ausgestaltung der Halteeinrichtung 8 für die Luftleitelemente 42-i bzw. Rotorelemente 40. In Fig. 6 werden die Luftleitelemente 42-i über eine erste und eine zweite Verbindungsstange 48-1 und 48-2, die die Längskanten 22-i kontaktieren, starr miteinander verbunden. Über eine dritte Verbindungsstange 48-3, die in das Strömungsprofil 9 übergeht, erfolgt die Verbindung des Rotorelements 40 mit der Rotorachse 4. Die beiden Strömungskanäle 24-1 und 24-2 sind in Längsrichtung offen ausgestaltet, wodurch sich bei längeren Luftleitelementen eine Materialersparnis und damit eine Verringerung der zu bewegenden Massen ergeben. Zusätzlich verhindern die an den Längsenden offenen Strömungskanäle 24-i die Gefahr der Verschmutzung oder der Vereisung der Strömungskanäle 24-i. Wenn die Luftleitelemente 42-i lang genug sind, sind die oben und unten offenen Strömungskanäle 24-i strömungstechnisch nicht schädlich.

In Fig. 7 sind die beiden Strömungskanäle 24-i durch ein oberes und unteres plattenförmiges Element 50-1 und 50-2, das jeweils alle drei Luftleitelemente 42-i miteinander verbindet, geschlossen und durch die plattenförmigen Elemente 50-i werden die Luftleitelemente 42-i auch in starrer Haltung zueinander fixiert. Über die dritte Verbindungsstange 48-3, das in das Strömungsprofil 9 übergeht, erfolgt die Verbindung mit der Rotorachse 4.

Die Ausgestaltung nach Fig. 8 stellt eine Kombination der Ausführungsformen nach Fig. 6 und 7 dar. Jedes einzelne Luftleitelement 42-i wird durch ein oberes und unteres plattenförmiges Element 60-1 und 60-2 abgeschlossen, jedoch weist jedes Luftleitelement 42-i sein eigenes oberes und unteres plattenförmiges Element 60-1 und 60-2 auf. D. h. die plattenförmigen Elemente 60-i benachbarter Luftleitelemente 42-i sind nicht miteinander verbunden. Die starre Verbindung der Luftleitelemente 42-i zueinander erfolgt über die Verbindungsstangen 48-1 und 48-2. Die Verbindung zur Rotorachse 4 erfolgt über die dritte Verbindungsstange 48-3, die in das Strömungsprofil 9 übergeht. Auch hier ergeben sich bei längeren Luftleitelementen eine Materialersparnis und eine damit verbundene Verkleinerung der zu bewegenden Massen.

Bei längeren Luftleitelementen 16 können auch mehrere Haltelemente verteilt über die Länge der Luftleitelemente 16 vorgesehen werden. Zu Verbesserung der Stabilität können die Luftleitelemente auch eine Querriffelung aufweisen.

### Bezugszeichenliste:

- R: Abstand der Rotorelemente von der Rotorachse
- BL: Breite der gebogenen Luftleitelemente in einer Schnittebene senkrecht zur Rotorachse
- L: Länge der Luftleitelemente in Richtung der Rotorachse

- 2: Rotor
- 4: Rotorachse
- 6-i: Rotorelemente
- 8: Halteeinrichtung
- 9: Strömungsprofil, Teil von 8
- 10: Umlaufbahn von 6-i
- 12: Windrichtung
- 14: Drehrichtung von 2
- 16-1: erstes Luftleitelement
- 16-2: zweites Luftleitelement
- 18: konvexe Seite
- 20: konkave Seite
- 22-i: Längskanten von 16-i, 42-i
- 24: Strömungskanal
- 25: Nicht-Überlappbereich der Luftleitelemente 16-i
- 26-1: oberes plattenförmiges Element von 8
- 26-2: unteres plattenförmiges Element von 8

- 30-i: Tragflügel
- 32: konvexe Seite von 30-i
- 34: konkave Seite von 30-i
- 36: Haltestangen mit Strömungsprofil

- 40: Rotorelement
- 42-i: Luftleitelemente
- 48-i: Verbindungstange mit Strömungsprofil
- 50-1: oberes plattenförmiges Element
- 50-2: unteres plattenförmiges Element

- 60-1: oberes plattenförmiges Element
- 60-2: unteres plattenförmiges Element

## Patentansprüche

1. Windkraftanlage zur Umwandlung von Windenergie in mechanische Energie mit einem um eine vertikale Rotorachse (4) drehbaren Rotor (2),
der wenigstens zwei Rotorelemente (6; 40) umfasst, die mittels einer Halteeinrichtung (8) im radialen Abstand zu der Rotorachse (4) angeordnet sind und die Umlaufbahn (10) der Rotorelemente (6; 40) in gleich große Sektoren unterteilen,
wobei jedes Rotorelement (6; 40) wenigstens zwei Luftleitelemente (16;42) aufweist, die quer zu ihrer Längserstreckung jeweils einen bogenförmigen Querschnitt mit einer Bogenlänge (BL) aufweisen, so dass die Luftleitelemente (16; 42) jeweils eine konkave Seite (20) und eine konvexe Seite (18) aufweisen, wobei jeweils zwischen zwei benachbarten Luftleitelementen (16; 42) ein Strömungskanal (24) ausgebildet ist, dessen Querschnitt sich in radialer Richtung nach Innen in Richtung der Rotorachse (4) verringert, wodurch ein Düseneffekt entsteht,
wobei die wenigstens zwei Luftleitelemente (16; 42) durch die Halteeinrichtung (8) in festem Abstand (R) zueinander und im radialen Abstand von der Rotorachse (4) fixiert sind,
wobei die konkaven Seiten (20) der Luftleitelemente (16; 42) von der Rotorachse (4) wegweisen, und
wobei die Bogenlänge (BL) unmittelbar benachbarter Luftleitelemente (16; 42) unterschiedlich groß ist, so dass sich der Strömungskanal (24) und ein Nicht-Überlappbereich (25) ergibt,
**dadurch gekennzeichnet,**
**dass** die Bogenlänge (BL) des schmäleren von zwei unmittelbar benachbarten Luftleitelementen (16; 42) zwischen 80% und 29% der Bogenlänge (BL) des breiteren Luftleitelements (16; 42) beträgt.

2. Windkraftanlage nach Anspruch 1, **dadurch gekennzeichnet, dass** die Bogenlänge (BL) des schmäleren von zwei unmittelbar benachbarten Luftleitelementen (16; 42) zwischen 50% und 29% der Bogenlänge (BL) des breiteren Luftleitelements (16; 42) beträgt.

3. Windkraftanlage nach einem der vorhergehenden Ansprüche, **dadurch gekennzeichnet, dass** sich die Bogenlänge (BL) der Luftleitelemente (16; 42) in einer Richtung von einem zum nächsten Luftleitelement (16; 42) vergrößert.

4. Windkraftanlage nach einem der vorhergehenden Ansprüche, **dadurch gekennzeichnet, dass** die Längsachse der Luftleitelement (16; 42) im Wesentlichen parallel zur Rotorachse (4) verläuft.

5. Windkraftanlage nach einem der vorhergehenden Ansprüche, **dadurch gekennzeichnet, dass** die Luftleitelemente (16; 42) in Längsrichtung geradlinig ausgebildet sind und parallel zueinander verlaufen.

6. Windkraftanlage nach einem der vorhergehenden Ansprüche, **dadurch gekennzeichnet, dass** die wenigstens zwei Luftleitelemente (16; 42) in Richtung Rotorachse (4) die gleiche Länge (L) aufweisen.

7. Windkraftanlage nach einem der vorhergehenden Ansprüche, **dadurch gekennzeichnet, dass** sich die Krümmung der Luftleitelemente (16; 42) entlang der Bogenlänge (BL) verändert.

8. Windkraftanlage nach Anspruch 7, **dadurch gekennzeichnet, dass** die Krümmung der Luftleitelemente (16; 42) in dem Bereich in dem sich zwei unmittelbar benachbarte Luftleitelemente (16; 42) überlappen größer ist als in dem Bereich in dem keine Überlappung besteht.

9. Windkraftanlage nach einem der vorhergehenden Ansprüche, **dadurch gekennzeichnet, dass** die Halteeinrichtung (8) die Strömungskanäle (24) zwischen zwei unmittelbar benachbarten Luftleitelementen (16; 42) an den Enden der Luftleitelemente abschließt.

10. Windkraftanlage nach einem der vorhergehenden Ansprüche, **dadurch gekennzeichnet, dass** die Rotorelemente (6; 40) mittels der Halteeinrichtung (8) in horizontaler Ebene schwenkbar an der Rotorachse (4) befestigt sind.

11. Windkraftanlage nach einem der vorhergehenden Ansprüche, **dadurch gekennzeichnet, dass** die Rotorelemente (6; 40) entlang der Rotorachse (4) auf verschiedenen Rotationsebenen angeordnet sind.

12. Windkraftanlage nach einem der vorhergehenden Ansprüche, **dadurch gekennzeichnet, dass** Luftleitelemente (16; 42) jeweils zwei Längskanten (22) aufweisen, die gefalzt und/oder gerundet sind.

13. Windkraftanlage nach einem der vorhergehenden Ansprüche, **dadurch gekennzeichnet, dass** radial außerhalb der Rotorelemente (6; 40) Tragflächenprofile (30) angeordnet sind, die über die Halteeinrichtung (8) starr mit den Rotorelementen (6; 40) und drehbar mit der Rotorachse (4) verbunden sind.

14. Windkraftanlage nach einem der vorhergehenden Ansprüche, **gekennzeichnet durch** ein Fundament in dem der Rotor (2) drehbar gelagert ist, und einen elektrischen Generator, der direkt oder über ein Getriebe mit Rotorachse (4) gekoppelt ist.

15. Land- oder Wasserfahrzeug **gekennzeichnet durch** eine Windkraftanlage nach einem der vorhergehenden Ansprüche als Antrieb.
